# FASCICULE DE BREVET EUROPEEN

(11) **EP 0 461 994 B1**
(45) Date de publication et mention de la délivrance du brevet: **27.04.1994**
(21) Numéro de dépôt: 91401548.2
(22) Date de dépôt: 11.06.1991
(51) Int. Cl.: B25B 5/16, B23Q 16/00

(54) **Système de maintien par serrage d'une pièce à brider**
Vorrichtung zum Halten eines Werkstückes
Clamping device for a workpiece

(30) Priorité: 15.06.1990 FR 9007539
(43) Date de publication de la demande: 18.12.1991
(73) Titulaire: NORELEM, Société Anonyme dite :, F-91882 Massy Cédex (FR)
(72) Inventeur: Marchand, Michel, F-84220 Gordes (FR)
(74) Mandataire: Gouvernal, Serge Lionel

(56) Documents cités:
- DE-A- 2 747 421
- US-A- 2 190 585
- US-A- 3 474 691

## Description

La présente invention est relative à un système de maintien par serrage d'une pièce à brider, du genre de ceux comportant une sphère d'appui pouvant osciller de façon limitée dans un logement sphérique d'une embase de poussée et comportant extérieurement un méplat d'appui venant s'appliquer sous pression sur la pièce à brider.

On connaît déjà un système de serrage de pièces à brider du type ci-dessus, dans lequel la sphère, tronquée extérieurement pour prendre appui sur la pièce à serrer, peut effectuer dans son logement sphérique un mouvement d'oscillation limité par un méplat inférieur qi'elle comporte et qui vient buter sur un fond plat correspondant que présente le logement recevant la sphère. Un tel système est illustré dans le catalogue édité en mars 1988 par la Firme Erwin HALDER KG, D-7958 LAUPHEIM 1, ALLEMAGNE.

Un autre système connu est illustré à la fig. 5 du DE-OS 27 47 421 de Nils BJORS. Dans ce document, la sphère oscillante présente à sa base un lamage butant latéralement sur un appendice faisant saillie au fond du logement recevant la sphère oscillante.

Ces systèmes, s'ils empêchent le retournement de la sphère d'appui pourvue du méplat de contact avec la pièce à serrer, présentent le grave inconvénient que ladite sphère présente un faible angle de basculement et que la portée de la sphère d'appui, dans la cavité sphérique la recevant, se trouve réduite de façon correspondante, ce qui limite la possibilité de charge autorisée sur le mécanisme de pression agissant sur la sphère d'appui.

La présente invention remédie aux inconvénients rappelés ci-dessus des dispositifs connus et elle vise la réalisation d'un système de maintien par serrage d'une pièce à brider, ledit système, qui comporte de manière connue une sphère tronquée montée mobile de façon limitée dans une cavité sphérique correspondante étant tel qu'il permette d'une part d'augmenter considérablement la surface de portée de la sphère tronquée dans sa cavité sphérique tout en augmentant de façon importante l'angle de nutation de ladite sphère dans sa cavité.

Ces résultats sont essentiellement obtenus, conformément à l'invention, par le fait que deux lamages cylindriques opposés, l'un à fond plat et l'autre à fond sphérique, sont pratiqués le premier dans la sphère à l'opposé de son méplat extérieur devant s'appliquer sur la pièce à brider et le second axialement dans le fond du logement sphérique recevant la sphère tronquée d'appui, la mobilité de la sphère d'appui étant limitée par une bille de butée (14) qui est logée dans le volume délimité par les deux lamages (10, 12) opposés et qui présente un diamètre tel qu'elle puisse être serrée entre les surfaces cylindriques respectives (16, 17) des deux lamages (10, 12), sans être coincée entre les fonds (11, 13) desdits lamages.

On obtient ainsi, par rapport aux dispositifs connus, une possibilité plus grande de basculement dans sa cavité de réception de la sphère à méplat, ce dernier restant cependant dans un plan ne coupant en aucun point la partie du système maintenant la bille dans son logement.

Dans une forme de réalisation préférée du dispositif conforme à l'invention, le diamètre de la bille de butée est inférieur à la somme des apothèmes des lamages cylindriques pratiqués l'un dans la sphère et l'autre dans l'embase de réception de cette dernière.

D'autres caractéristiques et avantages de l'invention ressortiront de la description qui va suivre en regard des dessins annexés qui illustrent à titre comparatif, schématiquement et simplement à titre d'exemple, un dispositif antérieur connu et diverses formes de réalisation d'un élément de serrage de pièce à brider équipé de la sphère tronquée d'appui réalisée selon l'invention.

Sur ces dessins :
- La figure 1: est une vue schématique en coupe axiale d'un dispositif connu, comportant une sphère à deux méplats sertie dans la cavité sphérique correspondante d'un élément porteur pourvu, dans le fond de la cavité sphérique, d'un lamage limitant le basculement de la sphère d'appui.
- La figure 2: est également une vue en coupe correspondant à celle de la figure 1, illustrant l'angle de basculement possible de la sphère sertie dans l'élément de support.
- La figure 3: est une vue schématique en coupe axiale d'une forme de réalisation de l'invention, dans laquelle la sphère, pourvue d'un lamage inférieur, est sertie dans un élément de support pourvu d'un lamage à fond sphérique recevant la bille de butée limitant le basculement de la sphère d'appui.
- La figure 4: est une vue correspondant à celle de la figure 3, taisant ressortir par rapport aux figures 1 et 2, d'une part la plus grande portée de la sphère d'appui dans son logement et, d'autre part, l'angle de nutation important obtenu pour la sphère d'appui.
- Les figures 5 à 8: sont des vues schématiques, également en coupe axiale, illustrant diverses formes de réalisation, dans lesquelles la sphère d'appui est maintenue en ajustement étroit dans son logement, par un élément taraudé se vissant sur le filetage correspondant de l'embase de pression comportant le logement sphérique recevant la sphère tronquée.

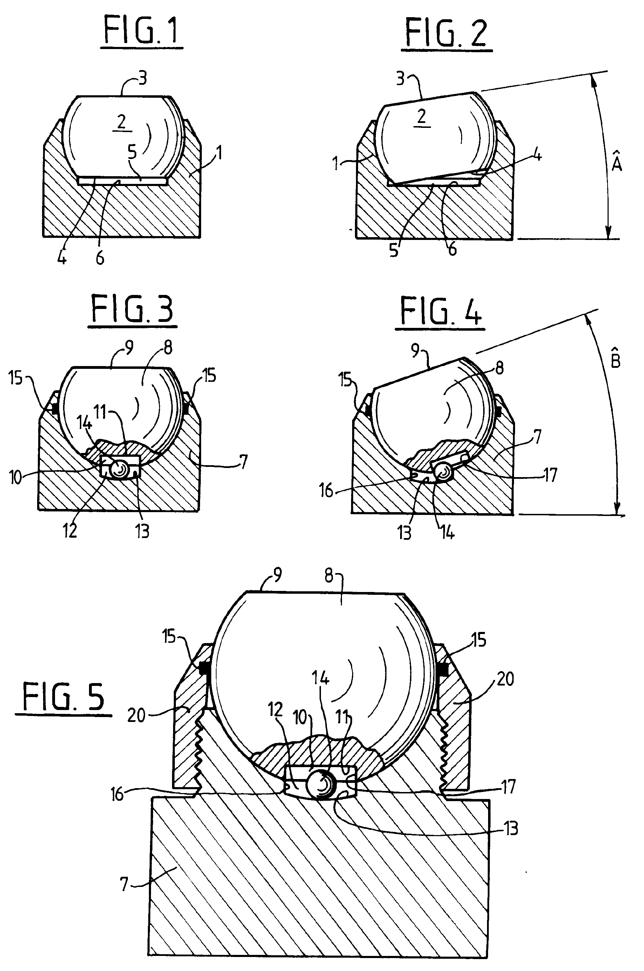

Le dispositif connu, illustré aux figures 1 et 2, comporte une embase 1 recevant une sphère 2 tronquée selon deux plans parallèles 3 et 4, un alvéole cylindrique 5 à fond plat 6 étant pratiqué dans l'embase 1, où la sphère 2 est sertie.

A la figure 2 est illustré l'angle de basculement maximal A de la sphère tronquée lorsque son méplat 4 inférieur vient buter sur le fond 6 également plat de l'alvéole 5 pratiqué dans l'embase 1.

Dans la première forme de réalisation qui est illustrée aux figures 3 et 4, le dispositif conforme à l'invention comporte une embase 7 pourvue de lèvres non spécialement référencées, qui enserrent une sphère 8 pourvue à l'extérieur d'un méplat 9 destiné à prendre appui sur une pièce à brider non représentée. Cette sphère 8 est pourvue, à l'opposé du méplat 9, d'un lamage cylindrique 10 à fond plat 11, ledit lamage se trouvant, en position axée de la sphère tronquée 8, en regard d'un lamage cylindrique axial correspondant 12 pratiqué dans l'embase 7 et présentant un fond sphérique 13. Entre les deux lamages 10 et 12 est insérée une bille de butée 14 limitant la nutation de la sphère tronquée 8.

A la figure 4, qui est une vue analogue à celle de la figure 3, mais qui illustre le basculement maximal de la sphère tronquée 8, on voit l'angle B plus important suivant lequel la sphère tronquée peut basculer au maximum, tout en disposant cependant dans son logement d'une surface de contact plus importante que celle obtenue avec le dispositif connu qui est illustré aux figures 1 et 2 .

Le grand méplat inférieur 4, que comporte la sphère 2 du dispositif connu (figures 1 et 2), diminue en effet considérablement la portée de la sphère 2 dans son logement et réduit par suite la charge qu'il est possible d'appliquer.

La charge n'agissant pas sur toute la surface du méplat externe 3 de la sphère 2, il se produit un couple et par conséquent une réaction qui tend à écarter les lèvres de sertissage qui maintiennent la sphère dans son logement.

Dans le dispositif conforme à l'invention et selon une autre caractéristique, pour éviter toute pénétration éventuelle de liquide d'arrosage ou de copeaux lors du façonnage de la pièce à usiner bridée par le dispositif de serrage à sphère d'appui, il est prévu un joint torique 15 de protection et d'étanchéité, qui s'applique sur la sphère au niveau des lèvres la maintenant dans son logement.

Dans une forme de réalisation préférée de l'invention, le joint 15 est en partie logé dans une rainure circulaire pratiquée dans les lèvres, fixes ou amovibles, qui maintiennent dans son logement la sphère tronquée 8 d'appui.

Comme on peut le voir à la figure 4, la bille 14, dans la position maximale de basculement de la sphère tronquée d'appui, est serrée entre les parois cylindriques respectives 16 et 17 des lamages 10 et 12.

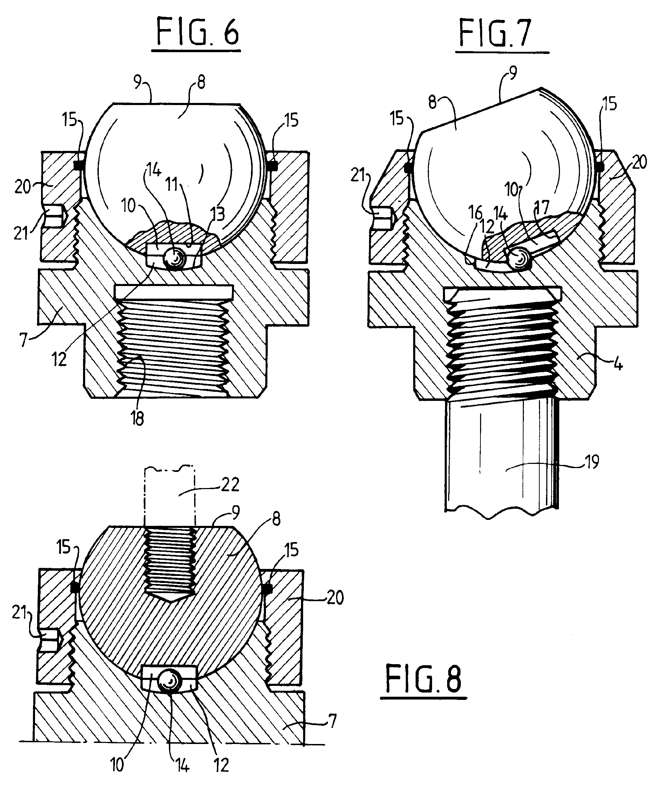

Dans les formes de réalisation qui seront décrites en regard des figures 6 à 8, les mêmes éléments sont désignés par les mêmes références.

Les figures 6 et 7 diffèrent des précédentes par le fait que l'embase 7 est pourvue d'un alésage taraudé 18 destiné à recevoir une broche ou tige 19 solidaire d'un organe de poussée non spécialement rerésenté et référencé.

A la figure 6 est même illustré, à titre de variante par rapport à la figure 7, un taraudage 18 de pas à gauche, prévu dans l'embase 7 et empêchant, en coopération avec le taraudage de pas à droite du chapeau 20 assurant le maintien de la sphère tronquée 8 dans son logement, tout desserrage intempestif d'une tige filetée non représentée, de pas à gauche, similaire à la tige filetée 19 de pas à droite, qui est illustrée à la figure 7.

Pour assurer sur l'embase 7 un serrage correct, voire dynamométrique, du chapeau 20 pressant ses lèvres de serrage sur la sphère 8, et ainsi que cela ressort des figures 6, 7 et 8, il est prévu, sur le chapeau 20 de maintien de la sphère 8 dans son logement pratiqué dans l'embase 7, un perçage borgne radial 21, avantageusement multipans, destiné à l'introduction d'une clé de manoeuvre dudit chapeau 20 pour son vissage sur un filetage correspondant de l'embase 7.

La variante de réalisation qui est illustrée à la figure 8 prévoit, pour le serrage doux de pièces relativement éloignées de la sphère tronquée 8 , de ménager dans cette dernière, dans l'axe de bridage, un taraudage radial destiné à recevoir une tige de poussée 22 munie elle-même d'un filetage et d'un patin d'appui, non représentés sur le dessin.

Il va de soi que l'invention n'a été décrite et représentée qu'à titre purement explicatif, et que, dans l'étendue des revendications, diverses modifications de détail pouvant être apportées à la forme de réalisation indiquée.

C'est ainsi par exemple qu'en fonction du problème de bridage envisagé, les lamages pourraient voir leur profondeur et leur diamètre varier, dans la mesure où ces modifications permettront toujours le dégagement complet du méplat de la sphère, dont la surface peut être réduite davantage pour permettre un basculement encore plus important de la sphère d'appui tronquée. De même, les lamages pourraient présenter des diamètres différents l'un de l'autre, celui à fond plat pratiqué dans la sphère, pouvant avoir un diamètre supérieure à celui du lamage à fond sphérique pratiqué dans l'assise de poussée.

## Revendications

1. Système de maintien par serrage d'une pièce à brider, présentant une sphère d'appui (8) qui peut osciller de façon limitée dans un logement sphérique d'une embase (7) de poussée et comporte extérieurement un méplat (9) d'appui venant s'appliquer sous pression sur la pièce à brider,
caractérisé par le fait que deux lamages cylindriques opposés, l'un (10) à fond plat (11) et l'autre (12) à fond sphérique (13), sont pratiqués le premier dans la sphère (8) à l'opposé de son méplat extérieur (9) venant s'appliquer sur la pièce à brider et le second axialement dans l'embase (7) du logement sphérique recevant la sphère tronquée (8) d'appui, la mobilité de la sphère (8) d'appui étant limitée par une bille de butée (14) qui est logée dans le volume délimité par les deux lamages (10, 12) opposés et qui présente un diamètre tel qu'elle puisse être serrée entre les surfaces cylindriques respectives (16, 17) des deux lamages (10, 12), sans être coincée entre les fonds (11, 13) desdits lamages.

2. Système de maintien par serrage d'une pièce à brider selon la revendication 1,
caractérisé par le fait que le diamètre de la bille (14) de butée est inférieur à la somme des apothèmes des lamages cylindriques (10, 12) pratiqués l'un dans la sphère (8) et l'autre dans l'embase (7) de réception de cette dernière.

3. Système de maintien par serrage d'une pièce à brider selon les revendications 1 et 2,
caractérisé par le fait qu'il est prévu un joint torique (15) de protection et d'étanchéité, qui s'applique sur la sphère (8) au niveau des lèvres du chapeau (20) la maintenant dans son logement.

4. Système de maintien par serrage d'une pièce à brider selon l'une des revendications 1 à 3,
caractérisé par le fait que le joint (15) est en partie logé dans une rainure circulaire pratiquée dans les lèvres, fixes ou amovibles, qui maintiennent dans son logement la sphère tronquée (8) pourvue extérieurement du méplat d'appui (9).

5. Système de maintien par serrage d'une pièce à brider selon l'une des revendications 1 à 4,
caractérisé par le fait que l'embase (7) est pourvue d'un alésage taraudé (18) destiné à recevoir une broche ou tige (19) solidaire d'un organe de poussée.

6. Système de maintien par serrage d'une pièce à brider selon l'une des revendications 1 à 5,
caractérisé par le fait qu'un taraudage (18), de pas à gauche, est prévu dans l'embase (7) empêchant, en coopération avec le taraudage pas à droite du chapeau (20) de maintien de la sphère tronquée (8) dans son logement, tout desserrage intempestif d'une tige filetée, de pas à gauche, vissée dans l'embase (7) et soumise à l'action d'un organe de poussée.

7. Système de maintien par serrage d'une pièce à brider selon l'une des revendications 1 à 6,
caractérisé par le fait qu'il est prévu, sur le chapeau (20) de maintien de la sphère (8) dans son logement pratiqué dans l'embase (7), un perçage borgne radial (21), avantageusement multipans, destiné à l'introduction d'une clef de manoeuvre dudit chapeau pour son vissage sur l'embase (7).

8. Système de maintien par serrage d'une pièce à brider selon l'une des revendications 1 à 7,
caractérisé par le fait que pour le serrage doux de pièces relativement éloignées de la sphère tronquée (8), il est prévu de ménager dans cette dernière un taraudage radial axial destiné à recevoir une tige souple de poussée (22) munie à un bout d'un filetage et à l'autre d'un patin comportant lui même un méplat d'appui.

## Claims

1. System for gripping a workpiece to be clamped, having a supporting sphere (8) which is capable of oscillating in a limited manner in a spherical housing in a thrust seating (7) and externally comprises a supporting flattened region (9) which is applied under pressure to the workpiece to be clamped, characterised in that two opposing cylindrical spot facings, one (10) having a flat base (11) and the other (12) a spherical base (13), are made, the first in the sphere (8) opposite its external flattened region (9) which is applied to the workpiece to be clamped and the second axially in the seating (7) of the spherical housing receiving the supporting truncated sphere (8), the mobility of the supporting sphere (8) being limited by an abutment ball (14) which is housed in the volume defined by the two opposing spot facings (10, 12) and has a diameter which is such that it may be gripped between the respective cylindrical surfaces (16, 17) of the two spot facings (10, 12) without being wedged between the bases (11, 13) of said spot facings.

2. System for gripping a workpiece to be clamped according to claim 1, characterised in that the diameter of the abutment ball (14) is smaller than the sum of the apothems of the cylindrical spot facings (10, 12) made in the sphere (8) and in the seating (7) for receiving the sphere (8) respectively.

3. System for gripping a workpiece to be clamped according to claims 1 and 2, characterised in that a protective sealing O-ring joint (15) is provided which is applied to the sphere (8) in the region of the lips of the hat (20) holding it in its housing.

4. System for gripping a workpiece to be clamped according to one of claims 1 to 3, characterised in that the joint (15) is partly housed in a circular groove made in the fixed or removable lips which hold the truncated sphere (8) provided externally with the supporting flattened region (9) in its housing.

5. System for gripping a workpiece to be clamped according to one of claims 1 to 4, characterised in that the seating (7) is provided with a tapped bore (18) intended to receive a spindle or rod (19) integral with a thrust member.

6. System for gripping a workpiece to be clamped according to one of claims 1 to 5, characterised in that tapping (18) having a left-handed thread is provided in the seating (7) preventing, in co-operation with the tapping having a right-handed thread of the hat (20) for holding the truncated sphere (8) in its housing, any untimely release of a threaded rod having a left-handed thread which is screwed into the seating (7) and is subjected to the action of a thrust member.

7. System for gripping a workpiece to be clamped according to claims 1 to 6, characterised in that, on the hat (20) for holding the sphere (8) in its housing made in the seating (7) there is provided a radial blind perforation (21) which is advantageously multi-sided and is intended for the introduction of a spanner for manipulating said hat so that it can be screwed onto the seating (7).

8. System for gripping a workpiece to be clamped according to one of claims 1 to 7, characterised in that for the gentle gripping of workpieces which are relatively far removed from the truncated sphere (8), axial radial tapping is provided in the truncated sphere (8) to receive a flexible thrust rod (22) equipped, at one end, with a thread and, at the other end, with a block which itself comprises a supporting flattened region.

## Patentansprüche

1. Vorrichtung zum Einspannen eines Werkstückes mit einer Haltekugel (8), die in begrenztem Maß in einem Kugelsitz eines Schubsockels (7) schwingen kann und an der Außenseite eine Halteabflachung aufweist, die unter Druck zur Anlage an das einzuspannende Werkstück kommt, dadurch gekennzeichnet, daß zwei zylindrische gegenüberliegende Senken, und zwar eine (10) mit ebenem Boden (11) und die andere (12) mit kugelförmigem Boden (13) zum einen in der Kugel (8) an der der äußeren Abflachung (9), die zur Anlage am einzuspannenden Werkstück kommt, gegenüberliegenden Seite und zum zweiten im Sockel (7) mit Kugelsitz, der die abgeschnittene Haltekugel (8) aufnimmt, ausgebildet sind, wobei die Beweglichkeit der Haltekugel (8) durch eine Lagerkugel (14) begrenzt ist, die in dem Volumen aufgenommen ist, das von den beiden gegenüberliegenden Senken (10, 12) begrenzt ist, und die einen derartigen Durchmesser hat, daß sie zwischen den jeweiligen Zylinderflächen (16, 17) der beiden Senken (10, 12) eingeschlossen ist, ohne zwischen den Böden (11, 13) der Senken eingeklemmt zu sein.

2. Vorrichtung zum Einspannen eines Werkstückes nach Anspruch 1, dadurch gekennzeichnet, daß der Durchmesser der Lagerkugel (14) kleiner als die Summe der Mittelsenkrechten der zylindrischen Senken (10, 12) ist, die einerseits in der Kugel (8) und andererseits im Sockel (7) zur Aufnahme letzterer ausgebildet sind.

3. Vorrichtung zum Einspannen eines Werkstückes nach den Ansprüchen 1 und 2, dadurch gekennzeichnet, daß sie mit einem Schutz- und Dichtungs-O-Ring (15) versehen ist, der an der Kugel (8) auf der Höhe der Ränder eines Aufsatzes (20) anliegt, der diese in seinem Sitz hält.

4. Vorrichtung zum Einspannen eines Werkstückes nach einem der Ansprüche 1 bis 3, dadurch gekennzeichnet, daß der Ring (15) teilweise in einer Ringnut in den Rändern des ortsfesten oder unbeweglichen Aufsatzes aufgenommen ist, der in seinem Sitz die abgeschnittene Kugel (8) hält, die an der Außenseite mit der Halteabflachung (9) versehen ist.

5. Vorrichtung zum Einspannen eines Werkstückes nach einem der Ansprüche 1 bis 4, dadurch gekennzeichnet, daß der Sockel (7) mit einer Gewindebohrung (18) zur Aufnahme einer Spindel oder eines Schaftes (19) versehen ist, die oder der fest mit einem Schubteil verbunden ist.

6. Vorrichtung zum Einspannen eines Werkstückes nach einem der Ansprüche 1 bis 5, dadurch gekennzeichnet, daß ein linksgängiges Gewinde (18) im Sockel (7) vorgesehen ist, das zusammen mit dem rechtsgängigen Gewinde des Aufsatzes (20) zum Halten der abgeschnittene Kugel (8) in seinem Sitz ein unerwünschtes Lösen eines Gewindeschaftes mit linksgängigem Gewinde verhindert, der in den Sockel (7) geschraubt ist und der Wirkung eines Schubteils ausgesetzt ist.

7. Vorrichtung zum Einspannen eines Werkstückes nach einem der Ansprüche 1 bis 6, dadurch gekennzeichnet, daß am Aufsatz (20) zum Halten der Kugel (8) in ihrem Sitz im Sokkel (7) eine, vorzugsweise mehrflächige radiale Blindbohrung (21) vorgesehen ist, die dazu bestimmt ist, einen Bedienungsschlüssel in den Aufsatz einzuführen, um diesen auf den Sockel (7) zu schrauben.

8. Vorrichtung zum Einspannen eines Werkstückes nach einem der Ansprüche 1 bis 7, dadurch gekennzeichnet, daß zum leichten Einspannen von Werkstücken relativ von der abgeschnittenen Kugel (8) entfernt in dieser ein radialaxiales Gewinde ausgespart ist, das dazu bestimmt ist, eine elastische Schubstange (22) aufzunehmen, die an einem Ende mit einem Gewinde und am anderen mit einem Schuh versehen ist, der seinerseits einen Schubsockel umfaßt.
